# EUROPÄISCHE PATENTSCHRIFT

(11) **EP 3 840 155 B1**
(45) Veröffentlichungstag und Bekanntmachung des Hinweises auf die Patenterteilung: **11.05.2022**
(21) Anmeldenummer: 20020619.1
(22) Anmeldetag: 15.12.2020
(51) Int. Cl.: H02G 3/18, H02G 3/08, H02G 3/14

(54) **BODENEINBAUEINHEIT FÜR ELEKTRISCHE ANSCHLÜSSE**
FLOOR FLUSH MOUNTED BOX FOR ELECTRICAL CONNECTIONS
BOÎTE D'ENCASTREMENT AU SOL POUR LES CONNEXIONS ÉLECTRIQUES

(30) Priorität: 16.12.2019 DE 102019008682
(43) Veröffentlichungstag der Anmeldung: 23.06.2021
(73) Patentinhaber: PUK Group GmbH & Co. KG, 12057 Berlin (DE)
(72) Erfinder:
(74) Vertreter: Jungblut & Seuss

(56) Entgegenhaltungen:
- EP-A1- 3 331 115
- EP-A2- 2 541 707
- US-A1- 2003 109 172

## Beschreibung

### Gebiet der Erfindung.

Die Erfindung betrifft eine Bodeneinbaueinheit für elektrische Anschlüsse, mit einem Unterteil und mit einem mit dem Unterteil verbindbaren Oberteil, wobei das Oberteil zur Aufnahme von elektrischen Anschlusselementen eingerichtet ist, wobei das Unterteil ein Kragenelement aufweist.

Hintergrund der Erfindung und Stand der Technik. Bodeneinbauelemente des eingangs genannten Aufbaus sind aus der Praxis in vielfältiger Ausbildung bekannt und lediglich beispielsweise wird auf die Literaturstellen EP 3331115 EP 1376805 A und EP 2101385 A verwiesen. Solche Bodeneinbauelemente werden in einen Boden eingebaut und stellen verschiedene Anschlussdosen für elektrische Anschlüsse bereit. Hierunter fallen neben Anschlüssen für Stromversorgungen insbesondere auch Telekommunikationsanschlüsse. Typischerweise, aber nicht notwendigerweise, weist ein Bodeneinbauelement einen zu öffnenden Deckel auf und ein elektrisches Gerät kann mit seinem Stecker mit einem geeigneten und in dem Bodeneinbauelement angeordneten Anschluss elektrisch und mechanisch verbunden werden.

Solche Bodeneinbauelemente umfassen typischerweise ein Unterteil und ein Oberteil. In das Unterteil werden elektrische Leitungen eingeführt. Das Oberteil trägt die spezifizierten Anschlussdosen und ggf. einen Deckel. Die Oberkante des Oberteils fluchtet meist mit dem Boden, in welchen das Bodeneinbauelement eingelassen ist.

Bei der Montage eines Bodeneinbauelementes werden typischerweise zur Verbindung von Bauelementen, insbesondere Unterteil und Oberteil Schraubverbindungen eingesetzt. Dies ist montagetechnisch aufwändig, insbesondere zeitaufwändig, zumal dafür von einer montierenden Person hierfür Kleinteile, wie Schrauben, und Werkzeuge bereitgehalten werden müssen.

Technisches Problem der Erfindung.

Der Erfindung liegt daher das technische Problem zu Grunde, ein Bodeneinbauelement zu schaffen, bei welchem insbesondere das Unterteil und das Oberteil einfach und schnell aneinander fügbar sind.

Grundzüge der Erfindung und bevorzugte Ausführungsformen.

Zur Lösung dieses technischen Problems lehrt die Erfindung eine Bodeneinbaueinheit für elektrische Anschlüsse, mit einem Unterteil und mit einem Oberteil, wobei das Unterteil zumindest eine Bayonettausnehmung aufweist, wobei das Oberteil zumindest einen Bayonetthaken aufweist, wobei die Bayonettausnehmung und der Bayonetthaken durch Aufsetzen des Oberteils auf das Unterteil und anschließend laterales Verschieben oder Drehen des Unterteils und/oder des Oberteils gegeneinander in Eingriff miteinander bringbar sind, wobei das Unterteil zumindest ein in Aufsetzrichtung des Oberteils federndes Federelement mit einer Rastausnehmung und das Oberteil zumindest eine mit der Rastausnehmung korrespondierende Rastnase aufweist, wobei die Rastnase in die Rastausnehmung einrastet, wenn die Bayonettausnehmungen und die Bayonetthaken miteinander in Eingriff gebracht sind, wobei die Anordnungen der Bayonettausnehmungen und Bayonetthaken an dem Unterteil und dem Oberteil miteinander vertauscht sein können, und wobei die Anordnungen des Federelements und der Rastnase an dem Unterteil und dem Oberteil miteinander vertauscht sein können.

Insbesondere betrifft die Erfindung eine Bodeneinbaueinheit für elektrische Anschlüsse, mit einem Unterteil und mit einem mit dem Unterteil verbindbaren Oberteil, wobei das Oberteil optional zur Aufnahme von elektrischen Anschlusselementen eingerichtet ist, wobei das Unterteil auf zwei zueinander parallelen und auf einem Kragenelement des Unterteils verlaufenden Unterteil-Linien auf jeder Unterteil-Linie zumindest eine Bayonettausnehmung aufweist, wobei das Oberteil auf zwei zueinander parallelen und auf der Unterseite des Oberteils verlaufenden Oberteil-Linien auf jeder Oberteil-Linie zumindest einen Bayonetthaken aufweist, wobei die Bayonettausnehmung und der Bayonetthaken durch Aufsetzen des Oberteils auf das Unterteil mit einander gegenüber liegenden Unterteil-Linien und Oberteil-Linien und anschließend laterales Verschieben des Unterteils und des Oberteils gegeneinander in Eingriff miteinander bringbar sind, wobei das Unterteil zumindest ein in Aufsetzrichtung des Oberteils federndes Federelement mit einer Rastausnehmung und das Oberteil zumindest eine mit der Rastausnehmung korrespondierende Rastnase aufweist, wobei die Rastnase in die Rastausnehmung einrastet, wenn die Bayonettausnehmungen und die Bayonetthaken miteinander in Eingriff gebracht sind, wobei die Anordnungen der Bayonettausnehmungen und Bayonetthaken an dem Unterteil und dem Oberteil miteinander vertauscht sein können, und wobei die Anordnungen des Federelements und der Rastnase an dem Unterteil und dem Oberteil miteinander vertauscht sein können.

Mit der Erfindung wird erreicht, dass sich ein Oberteil auf ein Unterteil aufsetzen lässt, so dass der Bayonetthaken in die Bayonettausnehmung eintaucht. Durch Verschieben des Oberteils in Richtung des Bayonetthakens hintergreift dann der Bayonetthaken das Kragenteil und fixiert so das Oberteil gegenüber dem Unterteil in vertikaler Richtung. Durch die in die Rastausnehmung dabei einrastende Rastnase wird das Oberteil gegenüber dem Unterteil dann auch in horizontaler Richtung fixiert, so dass Oberteil und Unterteil nicht ohne Weiteres voneinander lösbar sind, auch nicht durch den Versuch einer Verschiebung des Oberteils gegenüber dem Unterteil in horizontaler Richtung. Ein Lösen des Oberteils von dem Unterteil ist aber dennoch auch wieder möglich, nämlich indem das Federelement so betätigt wird, dass die Rastausnehmung von der Rastnase frei kommt, gefolgt von einer horizontalen Verschiebung des Oberteils gegenüber dem Unterteil in entgegengesetzter Richtung des Bayonetthakens.

Beide Vorgänge, Montage des Oberteils auf dem Unterteil, ebenso wie die Demontage, sind ohne Werkzeug und insbesondere ohne Kleinteile, wie Schrauben, zu bewerkstelligen. Die Montage ist folglich eine Angelegenheit von Sekunden und folglich mit minimalem Aufwand zu bewerkstelligen, und zwar auch von Montagepersonen ohne spezielle Montageausbildung.

Typischerweise ragt ein Oberteil einer solchen Bodeneinbaueinheit nicht oder nur sehr geringfügig (maximal ca. 10 mm) über einen umgebenden Boden hinaus. Ein Oberteil ist nicht dazu bestimmt von einer Bedienperson demontiert zu werden, es handelt sich insofern und bezogen auf eine Bedienperson um ein fest eingebautes Element.

Im Einzelnen bestehen die folgenden Möglichkeiten der weiteren Ausbildung. Hierbei ist zu beachten, dass sich diese bevorzugten Ausführungsformen zwar auf die Variante mit Bayonettausnehmungen in Unterteil und Bayonetthaken im Oberteil beziehen, ebenso ist jedoch in allen Fällen auch die Variante mit umgekehrter Anordnung von Bayonettausnehmungen und Bayonetthaken in analoger Weise möglich, ohne dass dies der ausdrücklichen Beschreibung in jeder Ausführungsform bedarf.

Grundsätzlich können das Unterteil und das Oberteil, jeweils für sich und unabhängig voneinander, aus beliebigen fachüblichen Materialien bestehen, wie Metall oder Kunststoff. Bevorzugt ist eine Ausführungsform aus Metall, insbesondere Normalstahl, ggf. verzinkt, oder nichtrostender Stahl.

Bevorzugt ist es, wenn auf den Unterteil-Linien jeweils 2 bis 5, insbesondere 2, Bayonettausnehmungen und auf den Oberteil-Linien jeweils 2 bis 5, insbesondere 2, mit den Bayonettausnehmungen korrespondierende Bayonetthaken angeordnet sind. Hierdurch wird eine besonders stabile und wackelfreie Verbindung zwischen Unterteil und Oberteil erreicht.

Das Federelement mit Rastausnehmung kann auf einer Unterteil-Linie angeordnet sein, wobei insbesondere auf jeder Unterteil-Linie jeweils ein Federelement mit Rastausnehmung und auf der jeder Oberteillinie jeweils ein mit den Rastausnehmungen korrespondierende Rastnase angeordnet sind. Im einfachsten Fall kann das Federelement ein Blattfederelement sein. Das Blattfederelement kann dabei zumindest ein auf einer Unterteil-Linie liegendes Festende aufweisen, wobei die Rastausnehmung vom Festende beabstandet und gegenüber dem Festende federnd auf der gleichen Unterteil-Linie angeordnet ist. Dann werden auch die Rastnasen auf der gleichen Oberteil-Linie, wie die Bayonetthaken angeordnet sein.

Die Bodeneinbaueinheit ist vorzugsweise im Wesentlichen würfel- oder quaderförmig ausgebildet, mit einem Unterteilboden, mit an den Unterteilboden angeschlossene Unterteilwände und mit an zumindest zwei einander gegenüberliegenden Unterteilwänden angeschlossenen und parallel zum Unterteilboden verlaufenden Kragenelementen, wobei die Unterteil-Linien auf den Kragenelementen und in deren Längserstreckung verlaufend angeordnet sind. Eine konstruktiv besonders einfache Ausführungsform ist dadurch gekennzeichnet, dass Blattfederelement aus einem Teilbereich des Kragens gebildet ist.

Eine produktionstechnisch besonders vorteilhafte Ausführungsform ist dadurch gekennzeichnet, dass das Unterteil einstückig aus einem ebenen Blechelement als Biegeteil ausgebildet ist.

Das Oberteil kann als im Wesentlichen quadratischer oder rechteckiger Einbaurahmen mit L-förmigem Rahmenquerschnitt ausgebildet sein. In einen solchen Einbaurahmen können dann geeignete Buchsen etc. für die gewünschten elektrischen Verbindungen eingesetzt werden, direkt, oder auf einer in den Einbaurahmen einzusetzende Tragplatte.

Auch das Oberteil ist besonders vorteilhafterweise einstückig aus einem ebenen Blechelement als Biegeteil ausgebildet.

Eine selbstständige und von der vorstehenden Beschreibung unabhängige Form der Nutzung einer erfindungsgemäßen Kombination von Bayonettverbindungen und Federelementen mit Rastnasen ist folgend beschrieben.

Dies betrifft eine Verbindung für eine Kabelbahn bzw. eine Kabelbahn aus Kabelbahnelementen, wobei jedes Kabelbahnelement einen Bahnboden und daran angeschlossene Bahnwände aufweist, wobei ein erstes Kabelbahnelement an zumindest einem Ende an dem Bahnboden und/oder beiden Bahnwänden zumindest eine Bayonettausnehmung aufweist, wobei ein an das erste Kabelbahnelement anzufügendes zweites Kabelbahnelement zumindest an einem Ende aus der Ebene des Bahnbodens und/oder der Bahnwände zumindest einen flächenparallel (außen oder innen) vorstehenden Bayonetthaken aufweist, wobei der Bayonetthaken bei überlappenden Enden des ersten Kabelbahnelementes und des zweiten Kabelbahnelementes in die Bayonettausnehmungen eingreift und bei Längsverschiebung des ersten Kabelbahnelementes und des zweiten Kabelbahnelementes (zueinander oder voneinander weg) darin einhakt, wobei das zweite Kabelbahnelement ein Federelement mit einer Rastnase aufweist, welches bei in die Bayonettausnehmung eingehaktem Bayonetthaken in eine Rastausnehmung des ersten Kabelbahnelementes einrastet.

Vorzugsweise wird das freie Ende des Bayonetthaken in Richtung des ersten Kabelbahnelementes weisen. Das Federelement kann als Blattfederelement ausgebildet sein.

Das erste Kabelbahnelement und das zweite Kabelbahnelement können einerseits an einem Ende mit Bayonetthaken und Federelement ausgestattet und ansonsten übliche Kabelbahnelemente sein, wobei ohnehin vorhandene Ausnehmungen am gegenüber liegenden Ende als Bayonettausnehmungen und Rastausnehmungen funktionieren.

Das erste Kabelbahnelement kann aber auch ein handelsübliches Kabelbahnelement sein (also ohne Bayonetthaken und Federelement), wobei ohnehin vorhandene Ausnehmungen die Bayonettausnehmungen und Rastausnehmungen sein können. Dann ist das zweite Kabelbahnelement ein Verbindungselement, welches spiegelsymmetrisch zu einer Mittenebene, bezogen auf die Längserstreckung, ausgebildet ist, also an beiden Enden Bayonetthaken und Federelemente trägt, wobei diese jedoch entgegengesetzte Funktionsrichtungen haben. Dann kann das zweite Kabelbahnelement mit seinem ersten Ende an das erste Kabelbahnelement angefügt und hiermit verrastet werden, und anschließend oder gleichzeitig kann ein drittes handelsübliches Kabelbahnelement an das zweite Ende des zweiten Kabelbahnelementes angefügt und hiermit verrastet werden. Diese Ausführungsform hat den Vorteil, dass handelsübliche Kabelbahnelemente als erstes und drittes Kabelbahnelement einsetzbar sind, während nur das zweite Kabelbahnelement als Verbindungelement funktioniert und an seinen Enden mit Bayonetthaken und Federelementen ausgestattet zu sein braucht.

Bevorzugt ist es, wenn die Bayonettausnehmungen und die Bayonetthaken und/oder die Federelemente in den beiden Bahnwänden eingerichtet sind.

Vorzugsweise sind pro Bahnwand je zwei Paarungen Bayonettausnehmungen/Bayonetthaken und je eine Paarung Rastnase/Rastausnehmung vorgesehen. Bei Einrichtung von mehreren (zwei oder mehr) Paarungen Bayonettausnehmungen/Bayonetthaken können diese, bezogen auf die Längserstreckung der jeweiligen Bahnwand, untereinander, hintereinander, oder schräg zueinander angeordnet sein.

Kabelbahnelemente können grundsätzlich aus allen fachüblichen Werkstoffen hergestellt sein, beispielsweise Kunststoff oder Metallblech, wie verzinkter Stahl oder rostfreier Stahl.

Im Stand der Technik werden Kabelbahnelemente dadurch aneinander gefügt, dass gegenüberliegende Enden in Überlappung gebracht und dann miteinander verschraubt werden. Dies ist aufwändig und umständlich, weil dafür Kleinteile, wie Schrauben, sowie Werkzeug benötigt werden.

Diese Variante der Erfindung erreicht, dass Kabelbahnelemente ohne Einsatz von Kleinteilen und ohne Werkzeuge aneinander anfügbar und miteinander mechanisch verbindbar sind.

Im Folgenden werden beide Varianten der Erfindung anhand von lediglich Ausführungsbeispiele darstellenden Figuren näher erläutert. Es zeigen:
- Fig. 1: ein Blechelement zur Herstellung eines Unterteils, vor Biegung,
- Fig. 2:: ein Blechelement zur Herstellung eines Oberteils, vor Biegung,
- Fig. 3:: ein fertig gebogenes Unterteil in Aufsicht,
- Fig. 4:: ein fertig gebogenes Oberteil in Ansicht von unten,
- Fig. 5:: den Gegenstand der Figur 4 in Seitenansicht A-A,
- Fig. 6:: zwei komplementäre Enden von Kabelbahnelementen, und
- Fig. 7:: den Gegenstand der Figur 6 in anderer Ansicht.

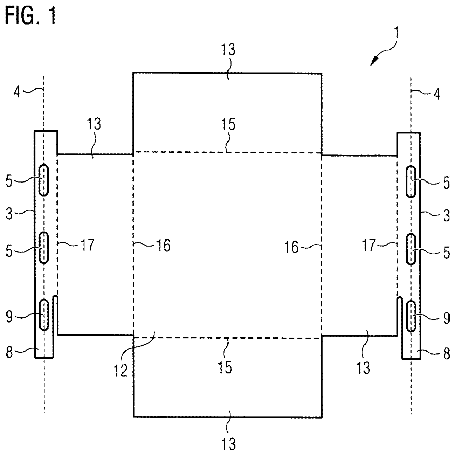

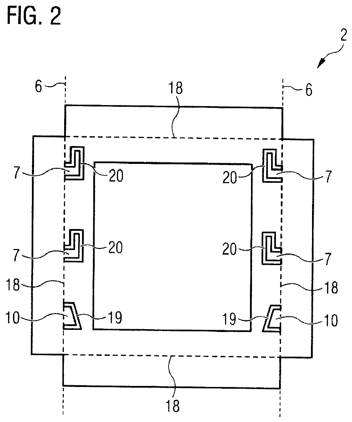

In den Figuren 1 und 2 erkennt man "Schnittmuster" für ein Unterteil 1 (Figur 1) und ein Oberteil (Figur 2) einer besonders vorteilhaften Ausführungsform der Erfindung.

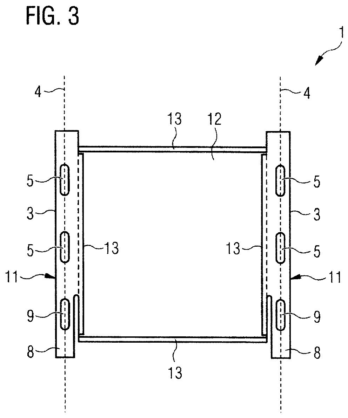

Aus einer vergleichenden Betrachtung der Figuren 1 und 3 entnimmt man, dass das Unterteil 1 einstückig aus einem ebenen Blechelement als Biegeteil ausgebildet und im Wesentlichen würfel- oder quaderförmig ist, mit einem Unterteilboden 12, mit an den Unterteilboden 12 angeschlossenen Unterteilwänden 13 und mit an zumindest zwei einander gegenüberliegenden Unterteilwänden 13 angeschlossenen und parallel zum Unterteilboden 12 verlaufenden Kragenelementen 3. Die Unterteil-Linien 4 sind auf den Kragenelementen 3 und in deren Längserstreckung verlaufend angeordnet. Die Blattfederelemente 8 sind aus einem Teilbereich der Kragenelemente 3 gebildet und weisen ein auf einer Unterteil-Linie 4 liegendes Festende 11 aus, wobei die Rastausnehmung 9 vom Festende 11 beabstandet und gegenüber dem Festende 11 federnd auf der gleichen Unterteil-Linie 4 angeordnet sind.

Aus dem "Schnittmuster" der Figur 1 werden die Unterteilwände 13 um ca. 90° aus der Papierebene heraus entlang der Biegekanten 15 und 16 nach oben gebogen. Die Kragenelemente 3 werden entlang der Biegekanten 17 um ca. 90° wieder zurück gebogen, so dass sie in einer zum Unterteilboden 12 parallelen Ebene und außerhalb des gebildeten Hohlraums des Unterteils 1 liegen.

In den Figuren 1 und 3 erkennt man des Weiteren insgesamt 4 Bayonettausnehmungen 5 sowie insgesamt 2 Rastausnehmungen 9, wobei die Bayonettausnehmungen 5 und die Rastausnehmungen auf zwei zueinander parallelen und auf den Kragenelementen 3 des Unterteils 1 verlaufenden Unterteil-Linien 4 auf jeder Unterteil-Linie angeordnet sind.

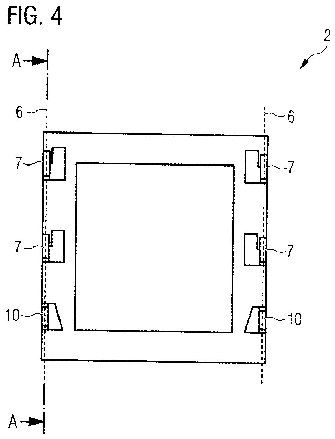

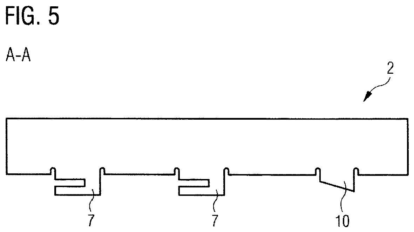

Einer vergleichenden Betrachtung der Figuren 2, 4 und 5 entnimmt man, dass auch das Oberteil 2 einstückig aus einem ebenen Blechelement als Biegeteil und als im Wesentlichen quadratischer oder rechteckiger Einbaurahmen mit L-förmigem Rahmenquerschnitt ausgebildet ist. Die in der Figur 2 umlaufenden Bereiche werden dazu um die Biegekanten 18 um ca. 90° aus der Papierebene nach unten gebogen. In der Figur 2 erkennt man beispielsweise mittels Laser geschnittene Konturschnitte 19 und 20 für die im Zuge des Biegens aus der Papiereben nach oben austretenden Bayonetthaken 7 und Rastnasen 10, welche auf den zueinander parallelen Oberteil-Linien 6 aneinander gereiht sind.

Einer vergleichenden Betrachtung insbesondere der Figuren 3, 4 und 5 entnimmt man, dass aufgrund der deckungsgleichen Unterteil-Linien 4 und Oberteil-Linien 6 die Bayonettausnehmungen 5 und die Bayonetthaken 7 durch Aufsetzen des Oberteils 2 auf das Unterteil 1 und anschließend laterales Verschieben (in der Papierebene der Figur 3) des Unterteils 1 und/oder des Oberteils 2 gegeneinander in Eingriff miteinander bringbar sind. Dabei rasten die Rastnasen 10 in die Rastausnehmung 9 ein, wenn die Bayonettausnehmungen 5 und die Bayonetthaken 7 miteinander in Eingriff gebracht sind. Dabei muss das Oberteil 2 gegen die Federkraft der Blattfederelemente 8 gegen das Unterteil gedrückt werden, damit alle Bayonetthaken 7 in allen Bayonettausnehmungen 5 in Eingriff bringbar sind. Am Ende des Verschiebens federn die Blattfederelemente 8 in ihre Ruhestellung zurück und umfassen die Rastnasen 10, so dass der Oberteil 2 und das Unterteil 1 nicht mehr gegeneinander verschiebbar sind.

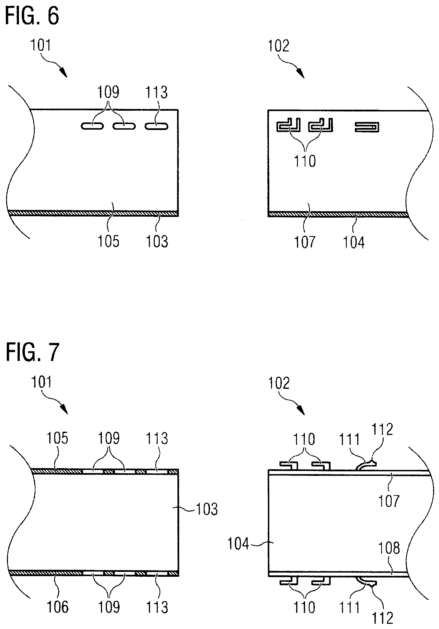

In den Figuren 6 und 7 ist ein anderer und unabhängiger Aspekt der Erfindung dargestellt.

Man erkennt aus einer vergleichenden Betrachtung dieser Figuren zwei Kabelbahnelemente 101, 102 im Bereich ihrer einander zugewandten Enden, wobei jedes Kabelbahnelement 101, 102 einen Bahnboden 103, 104 und daran angeschlossene Bahnwände 105, 106, 107, 108 aufweist, wobei das erste Kabelbahnelement 101 an zumindest einem Ende an beiden Bahnwänden 105, 106 zumindest zwei Bayonettausnehmungen 109 aufweist, wobei das an das erste Kabelbahnelement 101 anzufügende zweite Kabelbahnelement 102 an einem Ende aus der Ebene der Bahnwände 107, 108 zwei flächenparallel (außen) vorstehenden Bayonetthaken 110 aufweist, wobei der Bayonetthaken 110 bei überlappenden Enden des ersten Kabelbahnelementes 101 und des zweiten Kabelbahnelementes 102 in die Bayonettausnehmungen 109 eingreift und bei Längsverschiebung des ersten Kabelbahnelementes 101 und des zweiten Kabelbahnelementes 102 (zueinander) darin einhakt, wobei das zweite Kabelbahnelement 102 zwei Federelemente 111 mit je einer Rastnase 112 aufweist, welche bei in die Bayonettausnehmungen 109 eingehakten Bayonetthaken 110 in eine Rastausnehmung 113 des ersten Kabelbahnelementes 101 einrastet.

Die freien Enden der Bayonetthaken 110 weisen in Richtung des ersten Kabelbahnelementes 101. Die Federelemente 111 sind als Blattfederelement 111 ausgebildet.

Das erste Kabelbahnelement 101 und das zweite Kabelbahnelement 102 können einerseits an einem Ende mit Bayonetthaken 110 und Federelement 111 ausgestattet und ansonsten übliche Kabelbahnelemente 101, 102 sein, wobei ggf. ohnehin vorhandene Ausnehmungen am gegenüberliegenden Ende als Bayonettausnehmungen 109 und Rastausnehmungen 113 funktionieren.

Das erste Kabelbahnelement 101 kann aber auch ein handelsübliches Kabelbahnelement sein (also ohne Bayonetthaken 110 und Federelement 111), wobei ohnehin vorhandene Ausnehmungen die Bayonettausnehmungen 109 und Rastausnehmungen 113 sein können. Dann ist das zweite Kabelbahnelement 102 ein Verbindungselement, welches spiegelsymmetrisch zu einer Mittenebene, bezogen auf die Längserstreckung, ausgebildet ist, also an beiden Enden Bayonetthaken 110 und Federelemente 111 trägt, wobei diese jedoch entgegengesetzte Funktionsrichtungen haben. In den Figuren 6 und 7 wäre die beispielsweise, wenn die geschweifte Linie des zweiten Kabelbahnelementes 102 durch eine senkrecht zur Längserstreckung des zweiten Kabelbahnelementes 102 stehende Spiegelebene ersetzt würde. Dann kann das zweite Kabelbahnelement 102 mit seinem ersten Ende an das erste Kabelbahnelement 101 angefügt und hiermit verrastet werden, und anschließend oder gleichzeitig kann ein drittes (nicht dargestelltes) handelsübliches Kabelbahnelement an das zweite Ende des zweiten Kabelbahnelementes 102 angefügt und hiermit verrastet werden. Diese Ausführungsform hat den Vorteil, dass handelsübliche Kabelbahnelemente als erstes und drittes Kabelbahnelement einsetzbar sind, während nur das zweite Kabelbahnelement 102 als Verbindungelement funktioniert und an seinen Enden mit Bayonetthaken 110 und Federelementen 111 ausgestattet zu sein braucht.

Das Ineinanderfügen des zweiten Kabelbahnelementes 102 in das erste Kabelbahnelement 101 erfolgt in der Praxis dann dadurch, dass die freien Enden der Bahnwände 107, 108 in den Bereichen der Bayonetthaken 110 und Federelemente 111 per Hand oder mit einem Werkzeug etwas zueinander gedrückt werden, und das zweite Kabelbahnelement 102 in der Darstellung nach links in das erste Kabelbahnelement 101 so eingeschoben wird, dass die Bayonetthaken 110 in die Bayonettausnehmungen 109 einhaken und die Rastnasen 112 in die Rastausnehmungen 113 einhaken und so die eingehakten Bayonetthaken 110 in den Bayonettausnehmungen 109 fixieren.

## Patentansprüche

1. Bodeneinbaueinheit für elektrische Anschlüsse,
mit einem Unterteil (1) und mit einem Oberteil (2),
wobei das Unterteil (1) zumindest eine
Bayonettausnehmung (5) aufweist, wobei das Oberteil zumindest einen Bayonetthaken (7) aufweist,
wobei die Bayonettausnehmung (5) und der Bayonetthaken (7) durch Aufsetzen des Oberteils (2) auf das Unterteil (1) und anschließend laterales Verschieben oder Drehen des Unterteils (1) und/oder des Oberteils (2)
gegeneinander in Eingriff miteinander bringbar sind, **dadurch gekennzeichnet, dass** das Unterteil (1) zumindest ein in
Aufsetzrichtung des Oberteils (2) federndes
Federelement (8) mit einer Rastausnehmung (9) und das Oberteil (2) zumindest eine mit der Rastausnehmung (9) korrespondierende Rastnase (10) aufweist, dass die
Rastnase (10) in die Rastausnehmung (9) einrastet, wenn die Bayonettausnehmungen (5) und die Bayonetthaken (7) miteinander in Eingriff gebracht sind, dass die Anordnungen der Bayonettausnehmungen (5) und
Bayonetthaken (7) an dem Unterteil (1) und dem Oberteil (2) miteinander vertauscht sein können, und/oder dass
die Anordnungen des Federelements (8) und der Rastnase (10) an dem Unterteil (1) und dem Oberteil (2)
miteinander vertauscht sein können.

2. Bodeneinbaueinheit nach Anspruch 1, wobei das Unterteil (1) auf zwei zueinander parallelen und auf einem Kragenelement (3) des Unterteils verlaufenden Unterteil-Linien (4) auf jeder Unterteil-Linie (4) zumindest eine Bayonettausnehmung (5) aufweist, wobei das Oberteil (2) auf zwei zueinander parallelen und auf der Unterseite des Oberteils (2) verlaufenden Oberteil-Linien (6) auf jeder Oberteil-Linie (6) zumindest einen Bayonetthaken (7) aufweist,

3. Bodeneinbaueinheit nach Anspruch 1, wobei auf den Unterteil-Linien (4) jeweils 2 bis 5, insbesondere 2, Bayonettausnehmungen (5) und auf den Oberteil-Linien (6) jeweils 2 bis 5, insbesondere 2, mit den Bayonettausnehmungen (5) korrespondierende Bayonetthaken (7) angeordnet sind.

4. Bodeneinbaueinheit nach einem der Ansprüche 1 oder 2, wobei das Federelement (8) mit Rastausnehmung (9) auf einer Unterteil-Linie (4) angeordnet ist, wobei insbesondere auf jeder Unterteil-Linie (4) jeweils ein Federelement (8) mit Rastausnehmung (9) und auf jeder Oberteillinie (6) jeweils ein mit den Rastausnehmungen (9) korrespondierende Rastnase (10) angeordnet sind.

5. Bodeneinbaueinheit nach einem der Ansprüche 1 bis 3, wobei das Federelement (8) ein Blattfederelement (8) ist, wobei vorzugsweise das Blattfederelement (8) zumindest ein auf einer Unterteil-Linie (4) liegendes Festende (11) ausweist und wobei die Rastausnehmung (9) vom Festende (11) beabstandet und gegenüber dem Festende (11) federnd auf der gleichen Unterteil-Linie (4) angeordnet ist.

6. Bodeneinbaueinheit nach einem der Ansprüche 1 bis 5, wobei das Unterteil (1) im Wesentlichen Würfel- oder quaderförmig mit einem Unterteilboden (12), mit an den Unterteilboden (12) angeschlossenen Unterteilwänden (13) und mit an zumindest zwei einander gegenüberliegenden Unterteilwänden (13) angeschlossenen und parallel zum Unterteilboden (12) verlaufenden Kragenelementen (3) ausgebildet ist, wobei die Unterteil-Linien (4) auf den Kragenelementen (3) und in deren Längserstreckung verlaufend angeordnet sind.

7. Bodeneinbaueinheit nach einem der Ansprüche 1 bis 6, wobei das Blattfederelement (8) aus einem Teilbereich des Kragenelements (3) gebildet ist.

8. Bodeneinbaueinheit nach einem der Ansprüche 1 bis 7, wobei das Unterteil (1) einstückig aus einem ebenen Blechelement als Biegeteil ausgebildet ist.

9. Bodeneinbaueinheit nach einem der Ansprüche 1 bis 8, wobei das Oberteil (2) als im Wesentlichen quadratischer oder rechteckiger Einbaurahmen mit L-förmigem Rahmenquerschnitt ausgebildet ist.

10. Bodeneinbaueinheit nach einem der Ansprüche 1 bis 9 wobei das Oberteil (2) einstückig aus einem ebenen Blechelement als Biegeteil ausgebildet ist.

## Claims

1. A floor installation unit for electrical connections, comprising a base section (1) and a top section (2), the base section (1) including at least one bayonet recess (5), the top section including at least one bayonet hook (7), the bayonet recess (5) and the bayonet hook (7) being able to be brought into engagement by placing the top section (2) on the base section (1) and then by lateral displacement or rotatiion of the base section
(1) and/or of the top section (2) relative to each other, **characterized by that** the base section (1) includes at least one spring member (8) springing in the direction of engagement of the top section
(2) and comprising a locking recess (9), and the top section (2) includes at least one locking nose (10) corresponding to the locking recess (9), that the locking nose (10) is locked in the locking recess (9), when the bayonet recesses (5) and the bayonet hooks (7) have been brought into engagement, that the arrangements of the bayonet recesses (5) and of the bayonet hooks (7) at the base section (1) and the top section (2) may be interchanged, and/or the arrangements of the spring member (8) and of the locking nose (10) at the base section (1) and the top section (2) may be interchanged.

2. The floor installation unit of claim 1, wherein the base section (1) includes, on two mutually parallel base section lines (4) extending on a collar element (3) of the base section, at least one bayonet recess (5) on each base section line (4), wherein the top section (2) includes, on two mutually parallel top section lines (6) extending on the bottom side of the top section (2), at least one bayonet hook (7) on each top section line (6).

3. The floor installation unit of claim 1, wherein on the base section lines (4), 2 to 5, in particular 2, bayonet recesses (5) each are disposed, and on the top section lines (6), 2 to 5, in particular 2, bayonet hooks (7) each corresponding to the bayonet recesses (5) are disposed.

4. The floor installation unit of one of claims 1 or 2, wherein the spring member (8) with the locking recess (9) is disposed on a base section line (4), wherein in particular on each base section line (4) one spring member (8) each with the locking recess (9) is disposed, and on each top section line (6) one locking nose (10) each corresponding to the locking recesses (9) is disposed.

5. The floor installation unit of one of claims 1 to 3, wherein the spring member (8) is a leaf spring member (8), wherein preferably the leaf spring member (8) includes at least one fixed end (11) positioned on a base section line (4), and wherein the locking recess (9) is spaced from the fixed end (11) and is resiliently disposed opposite the fixed end (11) on the same base section line (4).

6. The floor installation unit of one of claims 1 to 5, wherein the base section (1) is substantially cubical or rectangular with a base section bottom (12), comprising base section walls (13) connected to the base section bottom (12) and comprising collar elements (3) connected to at least two mutually opposite base section walls (13) and extending in parallel to the base section bottom (12), wherein the base section lines (4) are disposed on the collar elements (3) and extend in the longitudinal extension thereof.

7. The floor installation unit of one of claims 1 to 6, wherein the leaf spring member (8) is formed from a partial section of the collar element (3).

8. The floor installation unit of one of claims 1 to 7, wherein the base section (1) is formed as one piece from a flat sheet-element member as a bent part.

9. The floor installation unit of one of claims 1 to 8, wherein the top section (2) is formed as a substantially square or rectangular installation frame with an L-shaped frame cross-section.

10. The floor installation unit of one of claims 1 to 9, wherein the top section (2) is formed as one piece from a flat sheet-element member as a bent part.

## Revendications

1. Bloc de distribution au plancher pour des connexions électriques, comprenant une partie inférieure (1) et une partie supérieure (2), la partie inférieure (1) comportant au moins une rainure de baïonnette (5), la partie supérieure comportant au moins un crochet de baïonnette (7), la rainure de baïonnette (5) et le crochet de baïonnette (7) pouvant être engagés par positionnement de la partie supérieure (2) sur la partie inférieure (1) et puis par déplacement latéral ou rotation de la partie inférieure (1) et/ou de la partie supérieure (2) l'une par rapport à l'autre, **caractérisé en ce que** la partie inférieure (1) comporte au moins un élément de ressort (8) faisant ressort dans la direction d'engagement de la partie supérieure (2) et comprenant une encoche d'encliquetage (9), et la partie supérieure (2) comporte au moins un ergot d'encliquetage (10) en correspondance avec l'encoche d'encliquetage (9), l'ergot d'encliquetage (10) venant s'encliqueter dans l'encoche d'encliquetage (9), quand les rainures de baïonnette (5) et les crochets de baïonnette (7) ont été mis en engagement, que les arrangements des rainures de baïonnette (5) et des crochets de baïonnette (7) à la partie inférieure (1) et la partie supérieure (2) peuvent être utilisés les uns pour les autres, et/ou les arrangements de l'élément de ressort (8) et de l'ergot d'encliquetage (10) à la partie inférieure (1) et la partie supérieure (2) peuvent être utilisés les uns pour les autres.

2. Bloc de distribution au plancher selon la revendication 1, dans lequel la partie inférieure (1) comporte, sur deux lignes (4) de la partie inférieure parallèles entre elles et s'étendant sur un élément de collier (3) de la partie inférieure, au moins une rainure de baïonnette (5) sur chaque ligne (4) de la partie inférieure, dans lequel la partie supérieure (2) comporte, sur deux lignes (6) de la partie supérieure parallèles entre elles et s'étendant sur le côté inférieur de la partie supérieure (2), au moins un crochet de baïonnette (7) sur chaque ligne (6) de la partie supérieure.

3. Bloc de distribution au plancher selon la revendication 1, dans lequel sur les lignes (4) de la partie inférieure, 2 à 5, notamment 2, rainures de baïonnette (5) respectivement sont disposées, et sur les lignes (6) de la partie supérieure, 2 à 5, notamment 2, crochets de baïonnette (7) respectivement en correspondance avec les rainures de baïonnette (5) sont disposés.

4. Bloc de distribution au plancher selon une des revendications 1 ou 2, dans lequel l'élément de ressort (8) avec l'encoche d'encliquetage (9) est disposé sur une ligne (4) de la partie inférieure, dans lequel en particulier sur chaque ligne (4) de la partie inférieure respectivement un élément de ressort (8) avec l'encoche d'encliquetage (9) est disposé, et sur chaque ligne (6) de la partie supérieure respectivement un ergot d'encliquetage (10) en correspondance avec les encoches d'encliquetage (9) est disposé.

5. Bloc de distribution au plancher selon une des revendications 1 à 3, dans lequel l'élément de ressort (8) est un élément de ressort à lames (8), dans lequel de préférence l'élément de ressort à lames (8) comporte au moins une extrémité fixe (11) positionnée sur une ligne (4) de la partie inférieure, et dans lequel l'encoche d'encliquetage (9) est espacée de l'extrémité fixe (11) et est disposée élastiquement en vis-à-vis de l'extrémité fixe (11) sur la même ligne (4) de la partie inférieure.

6. Bloc de distribution au plancher selon une des revendications 1 à 5, dans lequel la partie inférieure (1) est essentiellement cubique ou rectangulaire avec un fond (12) de la partie inférieure, comprenant des parois (13) de la partie inférieure liées au fond (12) de la partie inférieure et comprenant des éléments de collier (3) liés à au moins deux parois (12) de la partie inférieure opposées et s'étendant en parallèle au fond (12) de la partie inférieure, dans lequel les lignes (4) de la partie inférieure sont disposées sur les éléments de collier (3) et s'étendent dans l'étendue longitudinale de ceux-ci.

7. Bloc de distribution au plancher selon une des revendications 1 à 6, dans lequel l'élément de ressort à lames (8) est réalisé à partir d'une partie de l'élément de collier (3).

8. Bloc de distribution au plancher selon une des revendications 1 à 7, dans lequel la partie inférieure (1) est réalisée en une seule pièce à partir d'un élément plan en tôle comme une pièce arquée.

9. Bloc de distribution au plancher selon une des revendications 1 à 8, dans lequel la partie supérieure (2) est réalisée comme un cadre d'installation essentiellement carré ou rectangulaire d'une coupe transversale en L.

10. Bloc de distribution au plancher selon une des revendications 1 à 9, dans lequel la partie supérieure (2) est réalisée en une seule pièce à partir d'un élément plan en tôle comme une pièce arquée.
